(19) **Europäisches Patentamt / European Patent Office / Office européen des brevets**

(11) **EP 4 614 839 A1**

(12) **EUROPEAN PATENT APPLICATION**

(43) Date of publication:
**10.09.2025 Bulletin 2025/37**

(21) Application number: **25158553.5**

(22) Date of filing: **18.02.2025**

(51) International Patent Classification (IPC):
**H04B 10/516** $^{(2013.01)}$     **H04B 10/54** $^{(2013.01)}$

(52) Cooperative Patent Classification (CPC):
**H04B 10/516; H04B 10/541**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2024 US 202418600048**

(71) Applicant: **Nokia Solutions and Networks Oy
02610 Espoo (FI)**

(72) Inventors:
• **OZAYDIN, Basak
Cambridge, MA (US)**
• **CHE, Di
Union, NJ (US)**

(74) Representative: **Nokia EPO representatives
Nokia Technologies Oy
Karakaari 7
02610 Espoo (FI)**

(54) **PROBABALISTIC COSTELLATION SHAPING FOR PASSIVE OPTICAL LINKS**

(57)     A method for configuring an optical transmitter for transmitting optical signals over a passive optical link. The method includes using a digital processor to generate a target constellation probability distribution (CPD) for a probabilistic constellation encoder (PCE) of the optical transmitter. The target CPD is generated using a system performance optimization algorithm accounting for the transmitter peak power constraint and a peak enhancement property of a drive circuit of the optical transmitter.

FIG. 2

## Description

### TECHNICAL FIELD

The present invention generally relates to optical communication systems, and more particularly, to probabilistic constellation shaping of modulation formats.

### BACKGROUND

Probabilistic constellation shaping (PCS) has been deployed in commercial coherent optical transceivers, e.g., to facilitate rate adaptation to a variety of fiber channel conditions. For example, optical transceiver modules that use PCS and provide flexible data rate up to 1.2 Tb/s to cover transmission distance from tens of km to over thousands of km have been described. In coherent transmission systems over fiber-optic links with optical amplification, the launch power to the fiber may be limited by the fiber nonlinear noise, leading to an average power constraint (APC) transmission channel. It is known that for an APC channel, the optimal PCS distribution that approaches the channel capacity and maximizes the rate adaptation range is the quantized Gaussian distribution, named the Maxwell-Boltzmann (MB) distribution. The capability of rate adaptation is also attractive for short-reach interconnects without optical amplifiers. The need of such flexibility arises from the diversity of users with various rate demand and link quality. In particular, future optical access networks are expected to support a variety of user types with large disparity of channel conditions and data rate requirements.

### SUMMARY

An aspect of the present disclosure provides a method that comprises generating, with a digital processor, a target constellation probability distribution (CPD) for a probabilistic constellation encoder (PCE) of an optical transmitter, and configuring the PCE of the optical transmitter based on the target CPD. The generating comprises computing the target CPD based in part on a peak power constraint on a drive signal of the optical transmitter.

A related aspect of the present disclosure provides a method that comprises generating, with a digital processor, a target CPD for a PCE) of an optical transmitter, wherein the generating comprises executing a system performance optimization algorithm to search for a CPD satisfying a system performance criterion. Executing the system performance optimization algorithm comprises: determining, for a test CPD, a constellation scaling factor based on a peak power constraint of a drive signals of the optical transmitter, and computing a system performance estimate for the test CPD using the constellation scaling factor, the system performance estimate being computed for a system comprising the optical transmitter connected by a passive optical link to an optical receiver.

A related aspect of the present disclosure provides an apparatus comprising a digital processor. The digital processor is configured to generate a target CPD for a PCE of an optical transmitter. the digital processor is further configured to execute a system performance optimization algorithm to search for a CPD satisfying a system performance criterion. The system performance optimization algorithm comprises: determining, for a test CPD, a constellation scaling factor based on a peak power constraint of a drive signals of the optical transmitter; and computing a system performance estimate for the test CPD using the constellation scaling factor, the system performance estimate being computed for a system comprising the optical transmitter connected by a passive optical link to an optical receiver.

### BRIEF DESCRIPTION OF THE DRAWINGS

Embodiments disclosed herein will be described in greater detail with reference to the accompanying drawings which represent example embodiments thereof, which are not to scale, in which like elements are indicated with like reference numerals, and wherein:

FIG. 1 is a schematic block diagram of an optical communication system without optical amplification of PCS encoded signals according to an embodiment;

FIG. 2 is a schematic block diagram of an example probabilistic constellation encoder of an optical transmitter of the system of FIG. 1;

FIG. 3A is a schematic diagram of a PAM symbol constellation;

FIG. 3B is a schematic diagram illustrating symbols of a PCS PAM format;

FIG. 4 is a flowchart of a method for generating a target PCS distribution for an optical transmitter of a PPC-limited optical communication system;

FIG. 5 is a flowchart of an example process for mapping a PCS distribution to a peak output of a modulator drive circuit that may be used in the method of FIG. 4;

FIG. 6 is a flowchart of an example method for generating the target PCS distribution in the method of FIG. 4 based on a mapping of a PCS distribution to a peak output of a modulator drive circuit of the optical transmitter;

FIG. 7 is a schematic functional block diagram showing elements of a system for generating a target PCS distribution using the method of FIG. 4;

FIG. 8 is a schematic block diagram of a software programmable computing system for implementing selected elements of the system of FIG. 7;

FIG. 9 is a flowchart of a method for configuring a PCE of an optical transmitter according to an example embodiment.

## DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise.

Furthermore, the following abbreviations and acronyms may be used in the present document:

APC: Average power constraint
ASIC: Application specific integrated circuit
BER: Bit Error Rate
CPD: Constellation probability distribution
D/A: Digital-to-analog
DD: Direct Detection
DSP: Digital signal processor
E/O: Electrical to Optical
FEC: Forward error correction
FTTx: Fiber-to-the-X
IM: Intensity modulation
IM-DD: Intensity modulation and direct detection
MB: Maxwell-Boltzmann
O/E: Optical to Electrical
QAM: Quadrature Amplitude Modulation
PAM: Pulse amplitude modulation
PAPR: Peak-to-average-power-ratio
PAPR-E: Peak-to-average-power-ratio enhancement
PCS: Probabilistic constellation shaping
PMF: Probability mass function
PON: Passive optical network
PPC: Peak power constraint

The terms "PCS distribution" and "constellation probability distribution", or "CPD", are used herein interchangeably.

Examples described herein relate to optical transmitters using probabilistic constellation shaping (PCS) to communicate over passive optical links, i.e. optical links without mid-link optical amplifiers. Examples of such passive optical links include, but are not limited to, links of a passive optical network (PON) and short-reach interconnects, such as those used in datacenters among others. The use of PCS in an optical transmitter offers a rate adaptation capability that may allow to accommodate a diversity of rate demands and/or communicate over optical links of varying quality. In particular, future optical access networks are expected to support a variety of user types with large disparity of rate demand and channel condition, such as e.g. mobile X-Haul, fiber-to-the-X (FTTx), and cable access convergence systems. Currently, transmitters of a typical PON provide a fixed rate imposed by the worst-case user in the network, leading to a waste of network capacity.

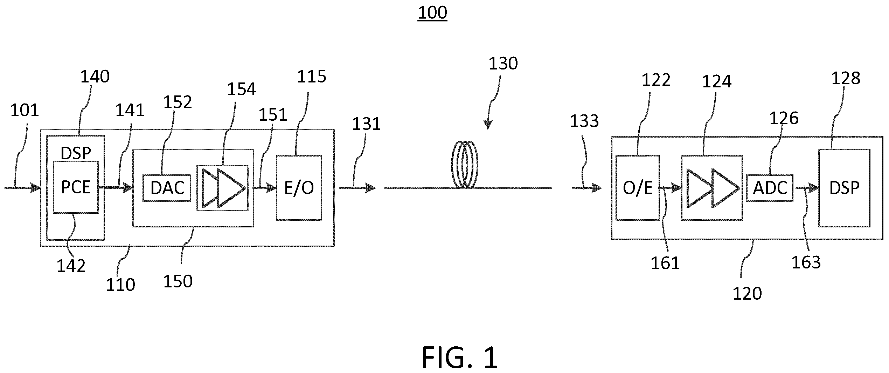

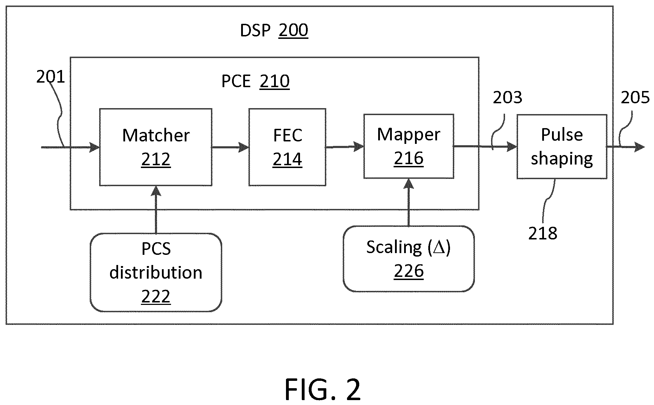

The use of PCS in systems without optical amplifiers may not be as straightforward as in amplified systems with APC channels. An optical transmitter for a transmission system without optical amplifiers may be subjected to a peak power constraint (PPC), such as e.g. a limit on a peak power of a drive signal applied to an electrical-to-optical (E/O) converter ("drive signal of the (optical) transmitter"). This peak power limit, i.e. the PPC, may also be described in terms of a limit on peak amplitude of the drive signal. A PPC may arise from limitations on the extinction ratio of the E/O converter, which is typically but not exclusively an optical modulator. In an ideal PPC-limited IM transmitter having a distortion-less electrical signal channel, the PPC simply imposes an upper limit on the amplitudes of the constellation symbols, a uniform PCS distribution may be optimal. However, in real-world optical transmitters, baseband data signals go through various stages before being mapped to optical intensities by the E/O converter, e.g. as described below with reference to FIGs. 1 and 2. These stages bring about the property of "peak enhancement", which may arise from, e.g., digital signal processing at the transmitter and bandwidth limits of various elements of a transmitter driver circuit. The peak enhancement property of optical transmitters may also be described as the enhancement of the Peak-to-Average-Power-Ratio (PAPR) of the signal from a baseband bit-to-symbol mapper to the E/O modulator, and may be referred to as the PAPR enhancement ("PAPR-E"). In a PPC limited system, the peak enhancement property of an optical transmitters complicates the selection of optimal PCS for maximizing transmitter performance. Furthermore, both the PAPR-E and the PPC may vary from transmitter to transmitter, which further complicates finding an optimum PCS.

Below, a method and an apparatus are described for selecting PCS parameters for an optical transmitter of a passive optical link that may enable maximizing link performance in a transmitter-adaptable manner.

Some aspects of configuring the PCS under PPC in the presence of peak enhancement may be described below with reference to example systems using pulse amplitude modulation (PAM), as such systems are often used in short-reach applications, especially for optical access. The skilled reader will be able to adapt the example implementations described herein to other types of PPC systems, e.g. those using coherent detection of optical PSK or QAM signals received over passive optical links, based on the description below.

FIG. 1 shows a block diagram of an optical communication system 100 ("system 100") having features of the present disclosure. System 100 includes an optical transmitter ("Tx") 110 connected by an optical link 130 to an optical receiver ("Rx") 120. The optical link 130, typically a fiber-optic link, is passive, i.e. lacks mid-link optical amplifiers. Accordingly, an optical signal 131 that is launched by the Tx 110 into the optical link 130 is attenuated by the propagation and coupling losses in the link, so that an optical signal 133 that is received by the Rx 120 from the link may be low in power; in such systems, the transmission performance may be limited by receiver noise, e.g. the thermal noise in the Rx 120.

The Tx 110 includes a digital signal processor (DSP) 140, a drive circuit 150, and an electrical to optical (E/O) converter 115. The DSP 140 is configured to generate a digital modulation signal 141 from an input digital signal 101 according to a selected modulation format. The E/O converter 115 is configured to generate the optical signal 131 responsive to a drive signal 151. The drive circuit 150 is configured to convert the digital modulation signal 141 into the drive signal 151 of the E/O converter 115.

The drive circuit 150 typically includes a digital to analog converter (DAC) 152 to convert the digital modulation signal 141 into an analog signal, and an RF driver 154 to convert the analog output of the DAC 152 into the drive signal 151 of the E/O converter 115.

The E/O converter 115 typically includes a laser followed by an optical modulator, which are not shown in the figure, with the drive signal 151 being applied to electrodes of the modulator. For example, the E/O converter 115 may include a distributed feedback laser integrated with an electro-absorption modulator. In another example, the optical modulator may include one or more Mach-Zehnder modulators (MZM), which may be formed in a same chip with the laser or in a different chip; e.g., a nested MZM may be used in embodiments where the Tx 110 is a coherent optical transmitter configured to use a quadrature modulation format. In other embodiments, the EO converter 115 may include a directly-modulated semiconductor laser. In any of the above implementations, there is typically a limitation, referred to herein as the PPC, on the peak power of the drive signal 151 that may be applied to the E/O converter 115. Without loss of generality, the drive signal 151 may be referred to herein as the modulator drive signal 151.

The Rx 120 includes an optical to electrical (O/E) converter 122, which may be followed by an optional signal amplifier 124, typically a TIA. The electrical output of the O/E converter 112 or the amplifier 124 is provided to a receiver DSP 128 after being digitized by an analog to digital converter (ADC) 126. The O/E converter 122 includes one or more photodetectors, typically photodiodes, to convert the received optical signal 133 to one or more electrical signals. E.g., in embodiments configured for direct detection (DD) of PAM signals, the O/E converter 122 may include a single PD, such as a PIN diode. In embodiments with coherent optical detection, the O/E converter 122 may include an optical mixer, e.g. an 90° optical hybrid, and an optical local oscillator, as known in the art of coherent optical communications.

Referring back to the Tx 110, the digital modulation signal 141 generated by the DSP 140 comprises a sequence of symbols of the selected modulation format, e.g. in the form of a sequence of electrical pulses of different amplitudes. A set of the symbols may be represented in a complex plane by a constellation of points defined by the modulation format, with the axes typically designated as "I" (in-phase) and "Q" (quadrature); in this representation, the distance to the center of the constellation represents the signal amplitude of the corresponding symbol. The DSP 140 is configured to use probabilistic constellation shaping (PCS) to convert the input data signal 101, typically a binary bit stream, into the digital modulation signal 141. The PCE 142 is configured to set the probabilities of different symbols of the selected modulation format in the modulation signal 141 according to a target probabilistic constellation shaping (PCS) distribution, which is typically described by a probability mass function (PMF). The target PCS PMF used by the PCE 142 may be adapted to the drive circuit 150 and the PPC of the E/O converter 115, as described below. In some embodiments, the target PCS PMF used by the PCE 142 may be adapted to characteristics of the Rx 120, e.g. the receiver noise. The Rx DSP 128 at the optical receiver 120 includes a corresponding probabilistic constellation decoder (not shown), which may operate in reverse to the PCE 142.

FIG. 2 is a functional block diagram of an example PCE 210 that may be configured as a module of a DSP 200. The DSP 200 may be, e.g., an ASIC, with the PCE 210 being implemented using some of the logic circuitry of the ASIC. The DSP 200 and the PCE 210 are example embodiments of the DSP 140 and the PCE 142, respectively, of the optical transmitter 110. The PCE 210 is configured to apply PCS to an input data signal 201 in accordance with a PCS distribution 222 to form an output digital signal 203. The output digital signal 203 comprises a probabilistically-shaped sequence of symbols of a selected modulation format, e.g. an M-level PAM as described below. In the illustrated example, the PCE 210 includes a distribution matcher 212 and a symbol mapper 216. The matcher 212 operates on the input data signal 210, typically a binary bit stream, to control the probability of occurrence of different constellation symbols of the selected modulation format in the output digital signal 203 in accordance with the PCS distribution 222. The PCS distribution 222 may be a discrete PMF described by a vector $\boldsymbol{p} = [p_1,...,p_M]$ composed of discrete probabilities $p_i$, $i$=1,..., $M$, of different constellation symbols of the selected modulation format. The matcher 212 may be configured to operate in accordance with different PCS distributions 222, which may be provided to the matcher 212 by the DSP 200. The symbol mapper 216 is configured to map the received bit stream to corresponding symbols of an M-symbol set, or alphabet, of the selected modulation format, with digital signals representing the symbols appearing at the output of the matcher 212 with probabilities according to the PCS distribution $\boldsymbol{p}$ 222. An optional FEC encoder (not shown) may add forward error correction encodings to the output of the matcher 212. The DSP 200 may include additional signal processing circuitry 218 to generate a digital input signal 205 for a modulator drive circuit. The circuitry 218 may be configured to perform some additional digital signal processing on the output 203 of the PCE 210, such as e.g. pulse shaping, filtering, and pre-distortions to counteract inter-symbol interference (ISI). The digital modulation signal 205 is an example of the digital modulation signal 151 of the Tx 110 of FIG. 1.

Referring back to FIG. 1, in an ideal optical transmitter with a delta function impulse response, the peak power of the drive signal 151 would be determined by the outmost modulation level of the digital modulation signal 141 at the output of the PCE 142. However, components of the Tx 110 are typically bandwidth-limited, and inevitably induce distortions. E.g., an eye diagram of a non-return-to-zero (NRZ) signal generated by a bandwidth-constrained transmitter typically exhibits two thicker peak levels, which is commonly referred to as peak distortion. Such distortion leads to a PCS-dependent peak power enhancement of the drive signal 151, and to PCS-dependent PAPR-E. Furthermore, signal processing in the DSP 140 or DSP 200, e.g. digital pulse filtering and/or pre-distortion performed by the DSP circuitry 218 downstream of the PCE 210, may limit the signal bandwidth by digital pulse shaping, e.g. to accommodate the component bandwidth constraint. The combine effect of the digital signal distortion may be to exacerbate the PCS-dependent peak enhancement at the E/O converter input, e.g. the PAPR-E. A further description of PARP-E related effects may be found in an article by D. Che, J. Cho and X. Chen, "Does Probabilistic Constellation Shaping Benefit IM-DD Systems Without Optical Amplifiers?" Journal of Lightwave Technology, vol. 39, no. 15, pp. 4997-5007, Aug.1, 2021, which is incorporated herein by reference.

The degree of peak enhancement or the PAPR-E depends on drive signal statistics, and thus on a particular PCS distribution, e.g. PCS PMF, 222 used by the PCE 142 or PCE 210. Therefore, the PPC imposed on the drive signal 151 by the E/O converter 115 leads to a constraint on the baseband signal 141 that may differ for different PCS distributions 222. This makes an optimal PCS distribution 222 for the Tx 110 dependent on PARP-E, which may differ for different Tx implementations, so that an optimal PCS distribution 222 may depend on specifics of the transmitter design. Furthermore, an optimal PCS distribution 222 may differ for different optical transmitters of nominally identical design, due to variations in characteristics of nominally identical transmitter components.

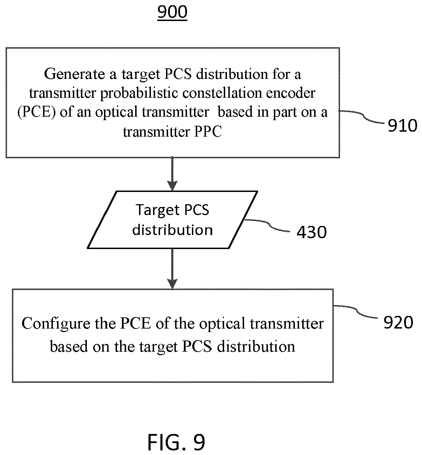

An aspect of the present disclosure provides a transmitter-dependent method for generating a PCS distribution for an optical signal transmitted over a passive optical link, such the optical signal 131 generated by the Tx 110. The method may include i) generating a target PCS distribution for a PCE (e.g. 140 or 200) of an optical transmitter (e.g. 110) based in part on a transmitter PPC, and ii) configuring the PCE of the optical transmitter based on the target PCS distribution (see e.g. FIG. 9, at 910 and 920). The method is described by way of example with reference to a PAM modulation format, which is typically used in short-reach IM-DD applications. The method allows a straightforward adaptation to other modulation formats, e.g. QAM, in a manner that will be evident to a skilled reader from the present description.

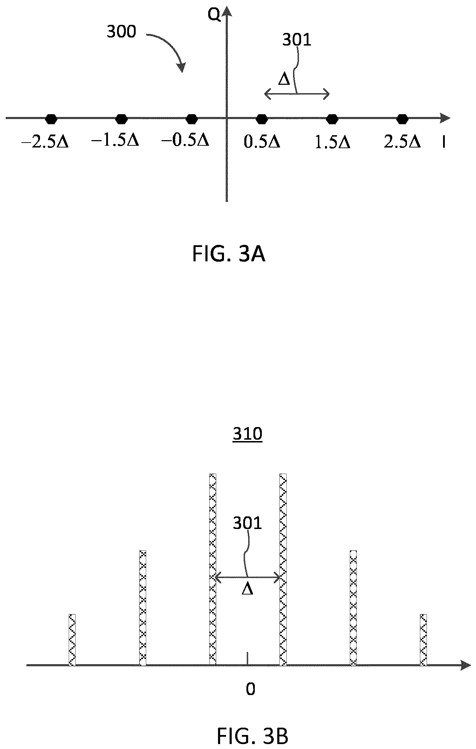

FIG. 3A schematically illustrates a constellation 300 of an M-symbol PAM ("PAM constellation 300"), with $M = 6$ by way of example. Each symbol of the PAM alphabet is represented by black diamond aligned along the horizontal axis "I". The distance of a symbol from the center of the constellation represents an amplitude of an electrical signal, typically a pulse, representing the symbol in the baseband, with the position to the left or the right from zero of the horizontal axis representing the sign of the corresponding baseband electrical signal. The adjacent-level spacing $\Delta$ is illustrated at 301, and is a "scaling" parameter of the PAM. The spacing $\Delta$ 301 may be tuned in the examples described below to scale the amplitudes of the (PAM) symbols to adapt to the PPC. The PAM 300 is bipolar symmetric in the electrical baseband; a bipolar symmetric PAM may be an optimal PAM for transmission over passive optical links, as described in the article by D. Che, J. Cho and X. Chen cited above. The drive circuit, e.g. 150, of the E/O converter may add a DC offset to convert the bipolar baseband M-PAM 300 to an M-level intensity modulation (IM) of the drive signal 153. In some embodiments, e.g. wherein the E/O converter includes an MZM, the drive signal 153 may be bipolar to differentially drive the MZM.

FIG. 3B schematically illustrates a corresponding PCS PAM format 310, resulting from applying a PCS to the PAM constellation 300. The different heights of the bars represent PCS probabilities $p_i$, $i = 1,..., M$, assigned to the corresponding symbols according to an example PCS distribution, e.g. 222. Finding an optimal, or target, PCS PAM format 310 for a particular optical transmitter or a group of transmitters may be formulated as a conditional optimization problem. Here, "optimal PCS distribution" refers to a target PCS PMF 222 that satisfies an objective criterion, e.g. maximizing, at least approximately, a transmission performance parameter of system 100, while ensuring that the PPC imposed on the transmitter is satisfied.

Some aspects of the method of the present disclosure are illustrated below using mathematics. It will be appreciated however that the mathematical description given below is symbolic and approximate in nature, and aspects of the actual operation of corresponding devices may deviate in details from the mathematical expressions given below.

The PCS PAM format 310 used by the Tx 110 is characterized by the PCS PMF p 222 and the distance 301 $\Delta$ between adjacent PAM levels, and may be described by a tuple ($\Delta$, $\boldsymbol{p}$). For the example with the symmetrical bipolar M-PAM 300, the tuple ($\Delta$, $\boldsymbol{p}$) includes $M/2$ parameters, i.e. the ($M/2$-1) independent probability values $p_i$, and the (PAM) level spacing $\Delta$ 301.

In the description below, "X" denotes the baseband PAM signal at the output of the PCE 142 or PCE 210, V denotes the drive signal 151 to the E/O converter 115 ("modulator drive signal 151"), $V_{max}$ is a maximum, or peak, value of V for a given X. The signal transmission channel between the PCE 142 and the E/O converter 115 maps a peak X value, denoted *max X,* to a peak V value, denoted *max V* or $V_{max}$ ("peak enhancement"). The mapping, i.e. the amount or degree of the peak enhancement, depends on the PCE PMF p and the PAM level distance $\Delta$, and may be symbolically described by the following equation (1):

$$V_{max} = f(\Delta, \boldsymbol{p}, max\,X) \qquad (1)$$

where $f(*)$ is a function of the above indicated parameters, and may be transmitter-specific.

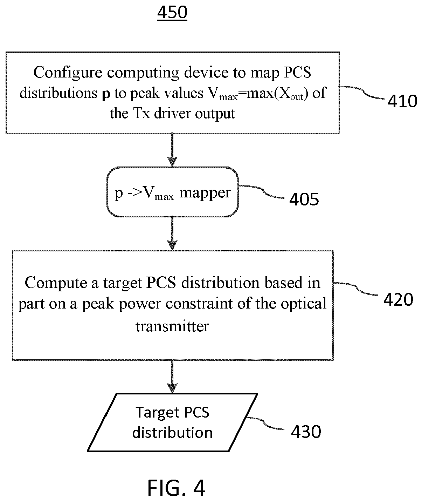

FIG. 4 illustrates some elements of an example method 400 for selecting a target PCS distribution $\boldsymbol{p}$ 430 for an optical transmitter of an optical transmission system subject to PPC, such as the Tx 110. Method 400 may be executed by a computing device including digital processing hardware. In some implementations, method 400 may be executed in part or in full by digital processing hardware of the optical transmitter, such as the DSP 200 or the DSP 140 of the Tx 110. Method 400 may also be executed in part or in full by digital processing hardware of a suitably programmed computer system that is separate from the optical transmitter; e.g., some of the related processing may be performed by a computer system of a transmitter calibration setup. The target PCS distribution $\boldsymbol{p}$ 430 selected by method 400 may then by communicated to the digital processing hardware of the optical transmitter to configure a PCE thereof, e.g. to the DSP 140 to configure the PCE 142. The target PCS distribution $\boldsymbol{p}$ 430 may be an example of the PCE PMF 222 (FIG. 2).

In the illustrated embodiment, method 400 begins at 410 with configuring a computing device to map different PCS distributions $\boldsymbol{p}$ for a chosen modulation format to corresponding values of a signal peak enhancement property of the drive circuit of the optical transmitter. E.g., the computing device may be configured, e.g. programmed, to implement a $\boldsymbol{p} \rightarrow V_{max}$ mapping functionality 405 ("$\boldsymbol{p} \rightarrow V_{max}$ mapper 405") that maps an arbitrary PCS distribution $\boldsymbol{p}$ for the chosen modulation format, e.g. the PCS PAM 310 with some fixed $\Delta = \Delta_0$, to a corresponding peak value of the modulator drive signal, $V_{max}$. Method 400 at 410 accounts for the transmitter PARP-E, and the resulting mapping may be specific to a particular optical transmitter or to a group of optical transmitters having approximately same PAPR-E.

At 420, method 400 computes a target PCS distribution 420, denoted $\boldsymbol{p_t}$, e.g. by selecting from a plurality of different PCS distributions {$p$ } using an optimization algorithm, based in part on a peak power constraint of the optical transmitter. The target PCS distribution 420 $p_t$ may further be configured at 420 to satisfy an objective, e.g. a transmission performance criterion.

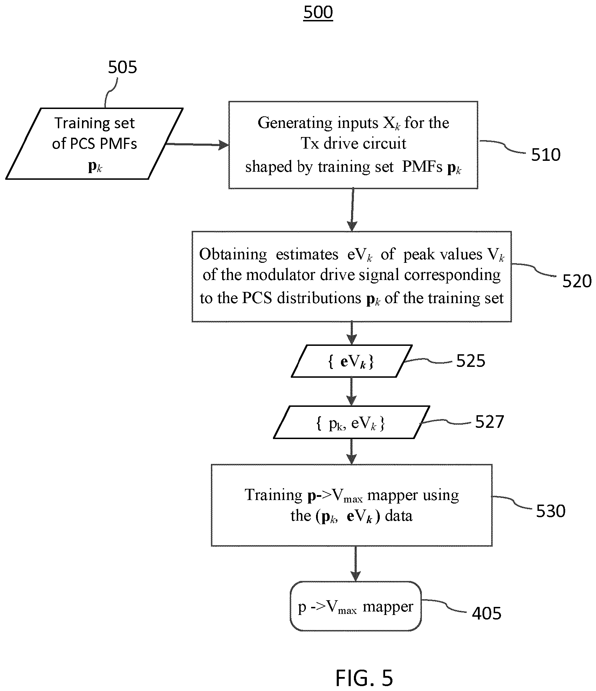

FIG. 5 illustrates an example process 500 that may be used at 410 of method 400, e.g. to configure the $p \rightarrow V_{max}$ mapping 405. In the illustrated embodiment, process 500 may begin at 510 with using a training set 505, {$p_k$}, of PCS distributions $p_k$, k=1,..., K, to generate corresponding test inputs $X_k$ for the drive circuit of the optical transmitter, e.g. the drive circuit 150. The number K > 1 of the training PCS distributions $p_k$ is a parameter of the method that may be chosen differently for different transmitters, e.g. depending on the PARP-E factor of the transmitter. By way of example, for M = 8 the K may be in a range, e.g., between 20 and 400. The training set 505 of PCS distributions, {$p_k$ }, may be selected to sample the PCS distribution space ΩM, e.g. in a random fashion. For the example of symmetrical bipolar M-PAM 300, each PCS distribution $p_k$ is composed of (M/2-1) independent probability values $p_i$, i = 1, .., (M/2-1). The PCS distribution space ΩM for the M-PAM 300 includes all $p_k$ whose component probabilities $p_i \geq 0$ satisfy $\sum_1^{\frac{M}{2}} p_i = 0.5$ .

In an example implementation, generating the training set 505 of PCS distributions $p_k$ at 510 may include the following steps: i) assigning a first value in the range [0,0.5] to a probability $p_1$ for the PAM level with the smallest amplitude; ii) assigning a second value in the range [0,0.5 - $p_1$] to a probability $p_2$ for the PAM level with the second smallest amplitude; iii) assigning a third value in the range [0,0.5 - $p_1$ - $p_2$] to a probability $p_3$ for the PAM level with the third smallest amplitude, etc. The process continues, until the level with the largest amplitude is assigned the probability

$p_{M/2} = 0.5 - \sum_{i=1}^{\frac{M}{2}-1} p_i$ . In an example implementation, the first, second, third, etc. values may be chosen randomly or pseudo-randomly in the respective ranges. This process is just one example of generating the training set of PCS distributions 505 to sample the space of PCS distributions for PAM 300, and other implementations are possible. For example, another method to generate the training set 505 to randomly sample the space of probability distributions for M-PAM 300 may include, e.g., generating an array of random integers of size M/2, and normalizing the array such that the sum of the array elements is 0.5. Non-random methods of sampling the space of probability distributions for a chosen symbol constellation, e.g. with a uniform or non-uniform density of sampling points, may also be envisioned.

At 520, process 500 may include obtaining estimates 525, denoted $eV_k$, of peak values $V_k$ of the modulator drive signal, e.g. 153, corresponding to the PCS distributions $p_k$ ("PCS PMFs") of the training set 505. This may include generating, for each of the PCS distributions $p_k$ of the training set 505, a correspondingly shaped test sequence $X_k$ of L symbols of the chosen modulation format, e.g. PAM 300; e.g., in each of the generated sequences, the (PAM) symbols appear with the frequencies defined by the corresponding PCS distribution $p_k$. Corresponding symbols in each of the sequences $X_k$ may be scaled to a same value, which for the PAM 300 corresponds to having a same fixed level spacing 301, $\Delta = \Delta_0$. The number L of the symbols in each of the sequences $X_k$ may be suitably large, e.g. so that each of the M symbols of the PAM alphabet appear at least once, or preferably more than once, e.g. at least 10 times, e.g. to lessen effects related to a particular choice of symbol sequences in the $X_k$.

In some implementations, at 520 process 500 may include generating the test sequences $X_k$ by the PCE of the optical transmitter, e.g. the PCE 142 of the Tx 110, and measuring a peak value of a resulting modulator drive signal, e.g. 153, at the output of the drive circuit, e.g. 150. Corresponding peak signal measurements may be performed, e.g., at a transmitter calibration stage using an RF signal measurement tool, e.g. an oscilloscope. In some implementations, estimates $eV_k$ of the peak drive signal may be obtained by measuring peak output optical power of the optical transmitter, e.g. using a suitably broad-band photodetector and an RF signal measurement tool.

In other implementations, a computer-implemented module may be used to obtain the peak drive signal estimates 525 $eV_k$. The module may be configured to emulate, e.g., a frequency response of the signal channel of the optical transmitter, e.g. the Tx 110, from the output of the PCE (e.g. 140) to the output of the drive circuit (e.g. 150).

To improve accuracy, subsets of several sequences $X_k$ may be generated at 520 for each, or some, of the PCS distribution $p_k$ of the training set 505, and peak values of corresponding drive signals averaged over respective subsets to obtain the estimates $eV_k$. An output of 510 of process 500 may be a training data set 527 of K tuples ($p_k$, $eV_k$) .

At 530 of process 500, the $p \rightarrow V_{max}$ mapper 405 is calibrated, or trained, using the training data set 527. In some implementations, this may include using a curve fitting algorithm. Non-limiting examples of suitable curve-fitting algorithms include but not limited, quadratic fitting and neural network fitting. The $p \rightarrow V_{max}$ mapper 405 may be a computer-implemented function, process, algorithm, or neural network that outputs a $V_{max}$ value responsive to any PCS distribution $p$ from the space of PCS distributions of the chosen modulation format, e.g. PAM 300.

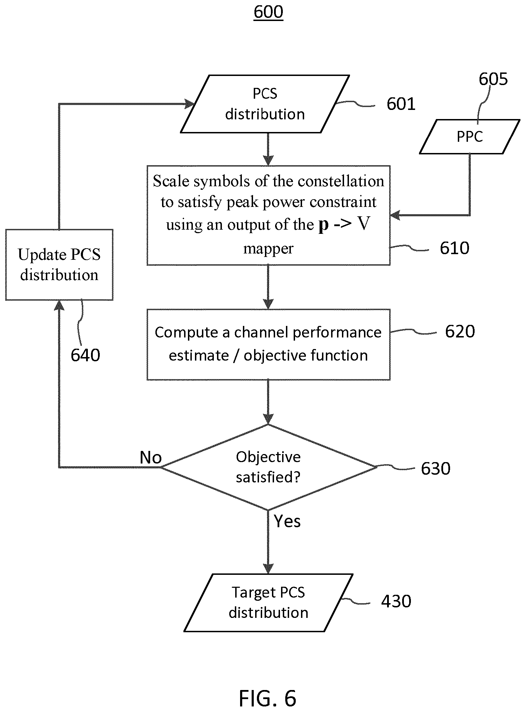

FIG. 6 illustrates selected elements of an iterative process 600 ("process 600") that may be used at 420 of method 400 to obtain the target PCS distribution 430. In the illustrated embodiment, process 600 may begin at 610 wherein constellation symbols are scaled so that a corresponding modulator drive signal, e.g. 153, satisfies the PPC 605 of the optical transmitter, e.g. the Tx 110, when said symbols are shaped according to a particular PCS distribution 601. This may include providing an initial test PCS distribution 601 as input to the mapper 405 to obtain a corresponding drive signal peak estimate $eV_{max}$, and scale the constellation symbols so that

$$eV_{max} \leq A, \quad (2)$$

where A is a peak drive signal constraint value defined by the transmitter PPC 605. For the PAM 300, the scaling may comprise determining the PAM level spacing $\Delta$ 301 to satisfy the above condition (2), e.g. so that $eV_{max} = A$. In an example implementation, the PAM level spacing $\Delta$ for a trial PCS PMF 601, $\Delta(p)$, may be estimated as

$$\Delta(p) = \Delta_0 \frac{A}{eV_{max}}, \quad (3)$$

where $\Delta_0$ is the value of the $\Delta$ used at 530 of process 500 to generate the mapper 405.

For the example of PSC PAM format 310 defined by a tuple $(\Delta, p)$, the corresponding symbol amplitudes may be expressed as

$$\mathcal{X}_p = \{-\frac{M-1}{2}\Delta(p), ..., -\frac{3}{2}\Delta(p), -\frac{1}{2}\Delta(p), \frac{1}{2}\Delta(p), \frac{3}{2}\Delta(p), ..., \frac{M-1}{2}\Delta(p)\} \qquad (4)$$

At 620, the process 600 may include computing a value of an objective parameter corresponding to the PSC PAM format $(\Delta, p)$. The objective parameter may be, e.g. a parameter related to transmission performance of a communication system subject to the PPC, e.g. system 100. Examples of the transmission performance parameter include, but are not limited to, transmitter-receiver mutual information in the communication system, general mutual information, bit error rate (BER) at the receiver, and the like.

In an example implementation, at 620 the process 600 may compute the mutual information $I(X;Y)$ of the communication channel between the optical transmitter, e.g. 110, and the corresponding optical receiver, e.g. 120. Here "X" may denote, e.g., the signal at the output of the PCE 142, and "Y" may denote, e.g., a signal at the input of a corresponding PSC decoder of the Rx 120. The mutual information $I(X;Y)$ quantifies the information that may be extracted at the receiver relative to the Tx-transmitted information. In an example implementation of an IM-DD channel where the receiver thermal noise is dominant, the channel can be modelled as an additive white Gaussian noise (AWGN) channel, and a conditional distribution $f_{Y|X}(y|x)$ of the channel output "y" given the channel input "x" can be described by equation (5):

$$f_{Y|X}(y|x) = \frac{1}{\sqrt{2\pi}\sigma} e^{-\frac{(y-x)^2}{2\sigma^2}} \qquad (5)$$

where a receiver noise parameter $\sigma$ may be estimated, e.g., based on the signal to noise ratio (SNR) of the receiver's electrical circuitry. In a typical implementation of system 100 where the receiver noise dominates, the noise parameter $\sigma$ may be estimated, e.g., based on receiver BER measurements prior to FEC. With the conditional distribution given by equation (5), the mutual information may be approximately described by the following equation (6):

$$I(X;Y) = \sum_{x \in \mathcal{X}_p} \int_{-\infty}^{\infty} P(X=x) \frac{1}{\sqrt{2\pi}\sigma} exp\left(-\frac{(y-x)^2}{2\sigma^2}\right) log\left(\frac{exp\left(-\frac{(y-x)^2}{2\sigma^2}\right)}{\sum_{z \in \mathcal{X}_p} P(X=z) exp\left(-\frac{(y-z)^2}{2\sigma^2}\right)}\right) dy \qquad (6)$$

where the summations in the RHS of equation (6) are over all elements of the constellation vector $X_p$ and $P(x)$ is the PCS probability of the corresponding element of the PCS PMF, x is an amplitude of a symbol of the $X_p$ constellation.

At 620, process 600 may estimate the mutual information for an input PCS PAM format 601, e.g. using equation (6). In a first iteration, process 600 may proceed to 640 to update the trial PCS distribution 601. The processing at 610 and 620 described above may then be repeated to obtain at 620 a next estimate of the objective parameter, e.g. the Tx-Rx mutual information $I(X;Y)$. At 630, process 600 may check if a pre-defined objective criterion is satisfied. This may include, e.g., comparing a current value of the objective parameter, e.g. the mutual information, to a value or values thereof at one or more of the preceding interactions of the method, or comparing a rate of change of the objective parameter to a threshold in another example. The method may end, e.g., when no improvement is recorded, or the rate of improvement is smaller than a threshold.

The PCS distribution update at 640 may be, e.g., in accordance with one of known optimization algorithms, e.g. the gradient descent algorithm. By way of example, at 640 process 600 may estimate the gradient $\nabla_{\boldsymbol{p}} I(X;Y)$ of the mutual information $I(X;Y)$, e.g. using equation (6), with respect to the PCS distribution $\boldsymbol{p}$, e.g. based on values of the corresponding probability coefficients $p_i$ from one or more previous iterations. Process 600 may then update the PCS distribution at 640 according to, e.g., a gradient ascend update rule given by equation (7):

$$\boldsymbol{p} = \boldsymbol{p} - h\nabla_{\boldsymbol{p}} I(X;Y) \qquad (7)$$

The step size of the gradient ascend $h$ may be a system parameter, and may be varied during the optimization. Starting with a large step size facilitates fast convergence, and ending up with a small step size offers better accuracy. Process 600 in this example may continue until it is determined at 630 that the gradient descent has converged, e.g. until a norm of the gradient $\nabla_{\boldsymbol{p}} I(X;Y)$ is determined at 630 to be smaller than a pre-defined threshold $\varepsilon$. To find a global optimum among all possible PCS PAM formats 310, process 600 may be repeated multiple times with different initial choices of the PCS PAM 601.

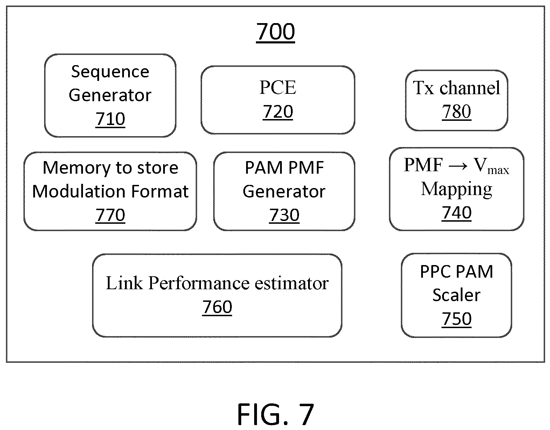

FIG. 7 illustrates selected elements of an example computing system 700 ("system 700") for generating a target PCS PMF for an optical transmitter of an optical communication system subject to a PPC, e.g. the Tx 110 of system 100. In the illustrated example, system 700 includes a test sequence generator 710, a PCE 720, a PMF generator 730, a PMF to $V_{max}$ mapper 740, a PPC PAM scaler 750, a system performance estimator 760, a Tx channel module 780, and a memory 770 for storing modulation format parameters, e.g. a PAM PMF and a corresponding PAM level spacing $\Delta$. In some embodiments, at least some of the shown elements of system 700 may be implemented using digital processing hardware of the optical transmitter, e.g. the DSP 140 of the Tx 120. In an example embodiment, the PCE 720 may be an embodiment of the PCE 210 or the PCE 142 of the Tx 110, with the memory 770 implemented within the DSP, e.g. 140 or 200, or in a co-located memory device communicatively coupled to the DSP. The PAM PMF generator 730 may be configured to implement process 500 to generate the training set of PCS PMFs 505, as described above with reference to FIG. 5. The PAM PMF generator 730 may also be configured to generate the trial PCS PMFs 601 in iterations of process 600, as described above with reference to FIG. 6. The sequence generator 710 may be configured to generate the test sequences $X_k$ at 510 of process 500, as described above with reference to FIG. 5. The Tx channel module 780 may be configured to emulate some effects of the transmission of signals generated by the PCE 720 through the electrical signal channel between the PCE and the E/O converter of the optical transmitter, e.g. between the outputs of the PCE 142 and the drive circuit 152 of the Tx 110. E.g., the Tx channel module 780 may be configured to emulate the frequency response of the electrical signal channel of the transmitter. The Tx channel module 780 may be used by process 500 at 510 to obtain the estimates 525, $eV_k$, of peak values of the transmitter channel response to the training sequences $X_k$, as described above with reference to FIG. 5. In some embodiments, wherein the PCE 720 is a part of the signal generation circuit of the optical transmitter, e.g. represents the PCE 142 of the Tx 110, the Tx channel module 780 may be the actual signal channel of the optical transmitter for which system 700 generates the target PMF, and may include analog circuitry of the drive circuit of the E/O converter of the optical transmitter; e.g., the Tx channel module 780 may include all of the elements in the signal path from the output of the PCE 1542 to the input of the E/O converter 115. The PPC PAM scaler 750 and the system performance estimator 760 may be configured to perform the operations at 610 and 620 of process 600, respectively, as described above with reference to FIG. 6.

In some embodiments, at least some of the elements of system 700 shown in FIG. 7 may be implemented with hardware logic, e.g. with the digital processing hardware, of the optical transmitter. In some embodiments, at least some of the elements of system 700 shown in FIG. 7 may be implemented with software in a separate computing device, e.g. a computer system of a transmitter calibration set-up. In some embodiments, all of the elements of system 700 may be implemented in software of a computer system external to the optical transmitter. In such embodiments, parameters of the modulation format generated by the computing system 700, e.g. the target PMF 430 and the corresponding amplitude scaling factor thereof, e.g. the PAM spacing $\Delta$, are uploaded to the DSP of the optical transmitter, e.g. 140, to configure the PCE thereof, e.g. the PCE 142.

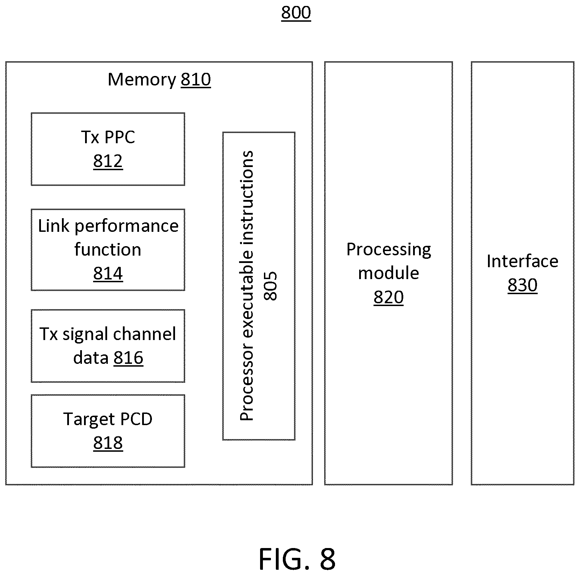

FIG. 8 illustrates selected modules of an example computing system 800 configured to generate a target PCS PMF for a PCE of an optical transmitter of a PPC-limited optical communication system, e.g. the Tx 110 of system 100. In the illustrated example, the computing system 800 includes a memory module 810 and a processing module 820. The memory module 810 may store processor executable instructions and/or data. In some implementations, the memory module 810 may store instructions to execute various operations of the method described herein, e.g. with reference to FIGs. 4-6. The processing module 820 is in communication with the memory module 810 and is configured to execute the instructions 805 stored in the memory module 810. For the purposes of this disclosure, the memory module 810 may include non-transitory computer-readable media that stores data and instructions for at least a period of time. The instructions 805 may include computer code, executable by the processing module 820, to implement all, or at least some, of the modules 710, 720, 730, 740, 750, 760, and 770 of system 700 described above with reference to FIG. 7. The memory module 810 may further be configured to include at least some of: memory 812 to store the PPC of the optical transmitter, memory 814 to store data for the system performance estimator 760, e.g. a receiver noise value, a lookup table comprising receiver noise values for different optical receivers, a lookup table comprising SNR values at the optical receiver for a plurality of link loss values, memory 816 to store Tx signal channel data for the Tx channel module 780, e.g. the electrical frequency response of the Tx signal channel, and memory 818 for storing selected modulation format parameters, e.g. the target PMF and the corresponding $\Delta$. The Tx channel data may be obtained, e.g. at a transmitter calibration stage, e.g. using an RF measurement setup, such as an oscilloscope, to measure the modulator drive signal 151 at the output of the RF drive circuit 150 (the input of the E/O converter 115).

The memory module 810 may include, without limitation and possibly in various combinations, non-transitory storage media such as a direct access storage device (e.g., a hard disk drive or floppy disk), a sequential access storage device (e.g., a tape disk drive), compact disk (CD), random access memory (RAM), read-only memory (ROM), CD-ROM, digital versatile disc (DVD), electrically erasable programmable read-only memory (EEPROM), and flash memory.

The computing system 800 may include, or be operatively connected to, an interface module 830. In some embodiments the interface 830 may be a suitable system, circuit, or device operable to serve as an interface between the processor 810 and digital processing hardware of an optical transmitter, such as e.g. the DSP 140, or some units or modules thereof. The interface 830 may enable communicating a target PCS distribution, and possibly one or more related modulation format parameters to one or more optical transmitters, such as the optical transmitter 110 to configure the PCE 142. In some implementations, the interface 830 may be communicatively coupled to a network storage resource. In some implementations, the interface 830 may be configured to interface with a person, i.e., a user. In some implementations, the interface 830 is configured to communicate with the PCE of an optical transmitter, e.g. the PCE 142 or PCE 210, either directly or via intermediate modules or circuits of the corresponding DSP, e.g. the DSP 110 or DSP 200.

The above described examples of the method and apparatus for configuring a PCE of an optical transmitter for communicating over a passive optical link are not intended to be limiting, and many variations will become apparent to a skilled reader having the benefit of the present disclosure. For example, the described technique may be adapted to modulation formats other than PAM; e.g., an adaptation to QAM is straightforward as QAM is composed of two PAMs mapped to the in-phase (I) and quadrature (Q) modulation signals. In some implementations, e.g. in short-interconnect optical systems with low optical loss of the transmission channel, the technique described above may account for signal noise originated at the optical transmitter ("transmitter noise") when estimating the transmission performance of the system, e.g. at 620 of method 600. Furthermore, the technique described above may be applicable to optical communication systems comprising one or more optical amplifiers, e.g. if transmission performance of the system is limited by the receiver noise rather than the amplified spontaneous emission (ASE) noise of optical amplifiers. Example of such systems may include systems using unsaturated optical amplifiers operating in a fixed gain mode, e.g. some booster optical amplifiers at the transmitter site. Furthermore, various features described above with reference to a specific embodiment or embodiments may be combined with other embodiments.

The examples described above, e.g. in the summary section and with reference to any one or more of the FIGs. 1-9, provide a method (e.g. 900, FIG. 9). The method comprises generating, with a digital processor (e.g. 140, FIG. 1; 200, FIG. 2; 820, FIG. 8), a target CPD (e.g. 222, FIG. 2; 430, FIGs. 4, 6, 9) for a PCE (e.g. 142, FIG. 1; 210, FIG. 2) of an optical transmitter (e.g. 110, FIG. 1), and configuring the PCE of the optical transmitter based on the target CPD. The generating comprises computing the target CPD based in part on a peak power constraint (e.g. 605, FIG. 6) on a drive signal (e.g. 151, FIG. 1) of the optical transmitter.

In some implementations, the computing may comprise selecting the target CPD from a plurality of different CPDs (e.g. 601) based on a peak enhancement property of a drive circuit (e.g. 150, FIG. 1) of the optical transmitter and the peak power constraint. In some implementations, the selecting may be based on estimates (e.g. 525, FIG. 5) of transmission performance of an optical system (e.g. 100, FIG. 1) comprising a passive optical link (e.g. 130, FIG. 1) connecting the optical transmitter to an optical receiver (e.g. 120, FIG. 1) for corresponding ones of the plurality of different CPDs, and wherein the estimates are computed based on the peak enhancement property of the drive circuit of the optical transmitter and the peak power constraint. The method may comprise computing the estimates of transmission performance based in part on receiver noise of the optical receiver.

In any of the above implementations, the method may comprise mapping (e.g. at 410, FIG. 4) the plurality of different CPDs to values of the signal peak enhancement property (e.g. 405). In some implementations, the mapping may include configuring the digital processor to generate an input signal (e.g. 141, FIG. 1) for the drive circuit for a given CPD, and to output a peak value of a corresponding output signal of the drive circuit. In some implementations, the mapping may include using a set of training CPDs (e.g. 505, FIG. 5) to configure the digital processor for the mapping. In some of the above implementations, the method may include providing the input signal (e.g. 141, FIG. 1) to a computer model (e.g. 780, FIG. 7) of the drive circuit of the optical transmitter. In some of the above implementations, the method may include providing the input signal to the drive circuit (e.g. 150, FIG. 1) of the optical transmitter.

In any of the above implementations of the method may include executing a conditional search algorithm (e.g.

600, FIG. 6) to generate at least some of the plurality of different CPDs.

Any of the above implementations of the method may include computing (e.g. at 610, FOG. 6) a constellation scaling factor for the PCE based on the peak power constraint and the peak enhancement property. In some implementations, the constellation scaling factor may be a distance between adjacent levels of a pulse amplitude modulation (PAM) format.

In any of the above implementations of the method, the digital processor may be a part of the optical transmitter. In some other implementation, generating of the target CPD may be performed using the digital processor of a computer system separate from the optical transmitter.

The examples described above, e.g. in the summary section and with reference to any one or more of the FIGs. 1-9, further provide a method that comprises generating, with a digital processor (e.g. 140, FIG. 1; 200, FIG. 2), a target CPD (e.g. 430) for a PCE (e.g. 142, 210) of an optical transmitter (e.g. 110), wherein the generating comprises executing a system performance optimization algorithm (e.g. 600, FIG. 6) to search for a test CPD satisfying a system performance criterion (e.g. at 630). Executing the system performance optimization algorithm comprises: determining, for the test CPD (e.g. 601), a constellation scaling factor (e.g. 301) based on a peak power constraint (e.g. 605) of a drive signal (e.g. 151) of the optical transmitter, and computing a system performance estimate (e.g. equation (7)) for the test CPD using the constellation scaling factor, the system performance estimate being computed for a system (e.g. 100) comprising the optical transmitter connected by a passive optical link (e.g. 130) to an optical receiver (e.g. 120).

The examples described above, e.g. in the summary section and with reference to any one or more of the FIGs. 1-9, further provide an apparatus comprising a digital processor (e.g. 140, FIG. 1; 200, FIG. 2). The digital processor is configured to generate a target CPD (e.g. 222, FIG. 2; 430, FIGs. 4, 6, 9) for a PCE (e.g. 142, FIG. 1; 210, FIG. 2) of an optical transmitter (e.g. 110, FIG. 1). The digital processor is further configured to execute a system performance optimization algorithm (e.g. 600, FIG. 6) to search for a CPD satisfying a system performance criterion. The system performance optimization algorithm comprises: determining, for a test CPD, a constellation scaling factor based on a peak power constraint (e.g. 605) of a drive signal (e.g. 151, FIG. 1) of the optical transmitter; and computing a system performance estimate for the test CPD using the constellation scaling factor, the system performance estimate being computed for a system (e.g. 100, FIG. 1) comprising the optical transmitter connected by a passive optical link (e.g. 130) to an optical receiver (e.g. 120).

In some implementations, the digital processor may be further configured to compute a peak value (e.g. 525) of the drive signal (e.g. 151) based on the test CPD (e.g. 601).

In any of the above implementations of the apparatus, the digital processor may be configured to compute the system performance estimate based on at least one of: signal noise of the optical receiver, and signal noise of the optical transmnitter.

In any of the above implementations of the apparatus, the digital processor may be a part of the optical transmitter. In other implementations, the apparatus may comprise a computing system (e.g. 800) including the digital processor and configured to communicate the target CPD to the optical transmitter.

The functions of the various elements shown in the figures, including any functional blocks labeled or referred to as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure.

Furthermore in the description above, for purposes of explanation and not limitation, specific details are set forth such as particular architectures, interfaces, techniques, etc. in order to provide a thorough understanding of the present inventions. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future.

While the present invention has been particularly shown and described with reference to example embodiments as illustrated in the drawing, it will be understood by one skilled in the art that various changes in detail may be affected therein without departing from the spirit and scope of the invention as defined by the claims.

Embodiments 14 and 17 to 20 defined below correspond to claims 14 and 17 to 20 of US patent application number 18/600,048 filed on 8 March 2024. They are disclosed here for the sake of completeness.

Embodiment 14. The method of claim 1 wherein the generating is performed using the digital processor of a computer system separate from the optical transmitter.

Embodiment 17. The apparatus of claim 15 wherein the digital processor is further configured to compute a peak value of the drive signal based on the test CPD.

Embodiment 18. The apparatus of claim 15 wherein the digital processor is configured to compute the system performance estimate based on at least one of: signal noise of the optical receiver and signal noise of the optical transmitter.

Embodiment 19. The apparatus of claim 15 wherein the digital processor is a part of the optical transmitter.

Embodiment 20. The apparatus of claim 15 comprising a computing system including the digital processor and configured to communicate the target CPD to the optical transmitter.

**Claims**

1.  A method comprising:

    generating, with a digital processor (140; 200), a target constellation probability distribution (CPD) (430) for a probabilistic constellation encoder (PCE) (142; 210) of an optical transmitter (110); and
    configuring the PCE of the optical transmitter based on the target CPD;
    wherein the generating comprises computing (420) the target CPD based in part on a peak power constraint on a drive signal (151) of the optical transmitter.

2.  The method of claim 1 wherein the computing comprises selecting the target CPD from a plurality of different CPDs (601) based on a peak enhancement property of a drive circuit (150) of the optical transmitter and the peak power constraint.

3.  The method of claim 2 wherein the selecting is based on estimates (525) of transmission performance of an optical system (100) comprising a passive optical link (130) connecting the optical transmitter to an optical receiver (120) for corresponding ones of the plurality of different CPDs, and wherein the estimates are computed based on the peak enhancement property of the drive circuit of the optical transmitter and the peak power constraint.

4.  The method of claim 2 comprising mapping (410) the plurality of different CPDs to values of the signal peak enhancement property.

5.  The method of claim 4 wherein the mapping includes configuring the digital processor to generate an input signal (141) for the drive circuit for a given CPD, and to output a peak value of a corresponding output signal of the drive circuit.

6.  The method of claim 5 including using a set of training CPDs (505) to configure the digital processor for the mapping.

7.  The method of claim 5 comprising providing the input signal (141) to a computer model (780) of the drive circuit of the optical transmitter.

8.  The method of claim 5 comprising providing the input signal to the drive circuit (150) of the optical transmitter.

9.  The method of claim 3 comprising computing the estimates of transmission performance based in part on receiver noise of the optical receiver.

10. The method of claim 3 comprising executing a conditional search algorithm (600) to generate at least some of the plurality of different CPDs.

11. The method of claim 3 wherein the selecting comprises computing (610) a constellation scaling factor (301) for the PCE based on the peak power constraint (605) and the peak enhancement property.

12. The method of claim 11 wherein the constellation scaling factor is a distance between adjacent levels of a pulse amplitude modulation (PAM) format.

13. The method of claim 1 wherein the digital processor (140) is a part of the optical transmitter (110).

14. A method comprising:

    generating, with a digital processor (140; 200), a target constellation probability distribution (CPD) (430) for a probabilistic constellation encoder (PCE) (142, 210) of an optical transmitter (110);
    wherein the generating comprises executing a system performance optimization algorithm (600) to search for a CPD satisfying a system performance criterion (630), and wherein the executing comprises:

    determining, for a test CPD (601), a constellation scaling factor (301) based on a peak power constraint (605) of a drive signal (151) of the optical transmitter; and
    computing a system performance estimate for the test CPD using the constellation scaling factor, the system performance estimate being computed for a system (100) comprising the optical transmitter (110) connected by a passive optical link (130) to an optical receiver (120).

15. An apparatus comprising:

    a digital processor (140; 200) configured to generate a target constellation probability distribution (CPD) (430) for a probabilistic constellation encoder (PCE) (142; 210) of an optical transmitter (110);
    wherein the digital processor is further configured to execute a system performance optimization algorithm (600) to search for a CPD satisfying a system performance criterion (630), the system performance optimization algorithm comprising:

    determining, for a test CPD (601), a constellation scaling factor (301) based on a peak power constraint (605) of a drive signal (151) of the optical transmitter; and
    computing a system performance estimate for the test CPD using the constellation scaling factor, the system performance estimate being computed for a system (100) comprising the optical transmitter (110) connected by a passive optical link (130) to an optical receiver (120).

FIG. 1

FIG. 2

FIG. 3A

FIG. 3B

450

Configure computing device to map PCS
distributions $\mathbf{p}$ to peak values $V_{max}=\max(X_{out})$ of
the Tx driver output ⌐ 410

$\mathbf{p} \rightarrow V_{max}$ mapper ⌐ 405

Compute a target PCS distribution based in
part on a peak power constraint of the optical
transmitter ⌐ 420

Target PCS
distribution ⌐ 430

FIG. 4

<u>500</u>

505

```
Training set
of PCS PMFs
    p_k
```

Generating inputs $X_k$ for the
Tx drive circuit
shaped by training set PMFs $\mathbf{p}_k$ — 510

Obtaining estimates $eV_k$ of peak values $V_k$
of the modulator drive signal corresponding
to the PCS distributions $\mathbf{p}_k$ of the training set — 520

$\{ eV_k \}$ — 525

$\{ p_k, eV_k \}$ — 527

Training $\mathbf{p}\text{->}V_{max}$ mapper using
the ($\mathbf{p}_k$, $eV_k$) data — 530

$p\text{->}V_{max}$ mapper — 405

FIG. 5

600

PCS distribution — 601

605

PPC

Scale symbols of the constellation to satisfy peak power constraint using an output of the $\mathbf{p} \rightarrow \mathrm{V}$ mapper — 610

Update PCS distribution

640

Compute a channel performance estimate / objective function — 620

No — Objective satisfied? — 630

Yes

Target PCS distribution — 430

FIG. 6

## 700

Sequence Generator
710

PCE
720

Tx channel
780

Memory to store Modulation Format
770

PAM PMF Generator
730

$PMF \rightarrow V_{max}$ Mapping
740

Link Performance estimator
760

PPC PAM Scaler
750

FIG. 7

800

| Memory 810 | | | |
|---|---|---|---|
| Tx PPC 812 | | | |
| Link performance function 814 | Processor executable instructions 805 | Processing module 820 | Interface 830 |
| Tx signal channel data 816 | | | |
| Target PCD 818 | | | |

# FIG. 8

900

Generate a target PCS distribution for a
transmitter probabilistic constellation encoder
(PCE) of an optical transmitter based in part on a
transmitter PPC — 910

Target PCS
distribution — 430

Configure the PCE of the optical transmitter — 920
based on the target PCS distribution

FIG. 9

## EUROPEAN SEARCH REPORT

Europäisches
Patentamt
European
Patent Office
Office européen
des brevets

**Application Number**

EP 25 15 8553

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CHE DI ET AL: "Does Probabilistic Constellation Shaping Benefit IM-DD Systems Without Optical Amplifiers?", JOURNAL OF LIGHTWAVE TECHNOLOGY, IEEE, USA, vol. 39, no. 15, 25 May 2021 (2021-05-25), pages 4997-5007, XP011866539, ISSN: 0733-8724, DOI: 10.1109/JLT.2021.3083530 [retrieved on 2021-07-15] | 1,2,4,5, 8,13 | INV. H04B10/516 H04B10/54 |
| A | * abstract * <br> * Sections I., III.B, IV-VII * <br> * figure 8 * <br> ----- | 3,6,7, 9-12,14, 15 | |
| X | CHE DI ET AL: "Modulation Format and Digital Signal Processing for IM-DD Optics at Post-200G Era", JOURNAL OF LIGHTWAVE TECHNOLOGY, IEEE, USA, vol. 42, no. 2, 1 September 2023 (2023-09-01), pages 588-605, XP011957231, ISSN: 0733-8724, DOI: 10.1109/JLT.2023.3311716 [retrieved on 2023-09-04] | 1,2,4,5, 8,13 | |
| A | * abstract * <br> * Sections II.B, II.C, III, VII * <br> <br> ----- <br> -/-- | 3,6,7, 9-12,14, 15 | |

**TECHNICAL FIELDS SEARCHED (IPC)**

H04B

The present search report has been drawn up for all claims

| Place of search | Date of completion of the search | Examiner |
|---|---|---|
| Munich | 7 July 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

| | Europäisches Patentamt European Patent Office Office européen des brevets | **EUROPEAN SEARCH REPORT** | **Application Number** EP 25 15 8553 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOSSAIN MD SABBIR-BIN ET AL: "Probabilistic Shaping for High-Speed Unamplified IM/DD Systems With an O-Band EML", JOURNAL OF LIGHTWAVE TECHNOLOGY, IEEE, USA, vol. 41, no. 16, 28 March 2023 (2023-03-28), pages 5373-5382, XP011945416, ISSN: 0733-8724, DOI: 10.1109/JLT.2023.3263039 [retrieved on 2023-03-29] | 1,13 | |
| A | * abstract * * Sections I, II.D, III-VI * * figures 3, 4 * ----- | 2-12,14, 15 | |
| | | | TECHNICAL FIELDS SEARCHED (IPC) |

The present search report has been drawn up for all claims

| Place of search | Date of completion of the search | Examiner |
|---|---|---|
| Munich | 7 July 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60004824

**Non-patent literature cited in the description**

- **D. CHE** ; **J. CHO** ; **X. CHEN**. Does Probabilistic Constellation Shaping Benefit IM-DD Systems Without Optical Amplifiers?. *Journal of Lightwave Technology*, 01 August 2021, vol. 39 (15), 4997-5007